# EUROPÄISCHE PATENTSCHRIFT

(11) **EP 1 890 300 B1**
(45) Veröffentlichungstag und Bekanntmachung des Hinweises auf die Patenterteilung: **16.05.2012**
(21) Anmeldenummer: 07015735.9
(22) Anmeldetag: 10.08.2007
(51) Int. Cl.: H01B 7/295

(54) **Beschichtete Kabelbandage**
Coated cable tape binding
Bandage de câble recouvert

(30) Priorität: 16.08.2006 DE 202006012624 U
(43) Veröffentlichungstag der Anmeldung: 20.02.2008
(73) Patentinhaber: Svt Brandschutz Vertriebsgesellschaft mbH, 21217 Seevetal (DE)
(72) Erfinder: Schober, Andree, 21029 Hamburg (DE)
(74) Vertreter: Pohl, Manfred

(56) Entgegenhaltungen:
- GB-A- 2 077 382
- US-A- 3 502 783
- US-A- 5 985 385

## Beschreibung

Die Erfindung betrifft eine Kabelbandage für brandschutztechnische Zwecke sowie Kabel, die mit einer Kabelbandage versehen sind.

Kabelbandagen der eingangs genannten Art sind grundsätzlich bekannt. Mit ihnen werden Kabel und Kabeltrassen umwickelt, um im Brandfall die Kabelisolierungen vor dem Feuer zu schützen und einer Ausbreitung des Feuers über die Kabel/Kabelbündel oder um negative Auswirkungen aus der Brandlast der Kabel zu verhindern. Zu diesem Zweck können die Kabelbandagen auch ein Trägermaterial aufweisen, das mit einem so genannten Dämmschichtbildner oder einem Ablationsbaustoff zweiseitig beschichtet oder durchtränkt ist. Der Dämmschichtbildner schäumt unter thermischer Einwirkung auf und sorgt dadurch für Feuerschutz. Der Ablationsbaustoff wirkt endotherm und spaltet im Brandfall kristallin gebundenes Wasser ab und sorgt damit für einen Kühleffekt.

Die bekannten Kabelbandagen haben jedoch den Nachteil, dass sich auf ihrer Oberfläche bereits nach kurzer Zeit Ablagerungen ansammeln können, die unter Umständen selbst brennbar sind oder von Fall zu Fall gestellte Anforderungen an Hygiene und Optik nicht erfüllen. Darüber hinaus wurde beobachtet, dass die bekannten Kabelbandagen im Brandfall auch rauchgasdurchlässig und infolge starker Verschmutzung wenig alterungsbeständig sind.

Aufgabe der vorliegenden Erfindung ist es daher, eine neue Kabelbandage für brandschutztechnische Zwecke bereitzustellen, die die aufgezeigten Nachteile der bekannten Kabelbandagen beseitigt.

Erfindungsgemäß erfolgt die Lösung der gestellten Aufgabe durch eine Kabelbandage mit einem Trägermaterial, das auf seiner einen Seite mit einem Dämmschichtbildner oder Ablationsbaustoff und auf seiner anderen Seite mit einer Kunststoff- oder Metallschicht versehen ist. Eine solche Kabelbandage hat den Vorteil, dass sie einerseits von den Wirkungen des Dämmschichtbildners und der Ablationsbeschichtung profitiert und andererseits eine äußere Oberfläche aufweist, die gut zu reinigen und dekontaminationsfähig ist. Hierdurch ist die neue Kabelbandage sogar in Kernkraftanlagen einsetzbar, bei denen die Dekontamination von radioaktiv kontaminierten Oberflächen verlangt wird. Als Dämmschichtbildner kommt vor allem "PYRO-SAFE FLAMMOPLAST KS 1" (DIBt-Baustoff-Zulassung Nr. Z-19.11-389) und als Ablationsbaustoff "PYRO-SAFE FLAMMOTECT-A" (DIBt-Baustoff-Zulassung Nr. Z-19.11-1324) in Betracht.

Nach einer bevorzugten Ausgestaltung der Erfindung handelt es sich bei der Kunststoffschicht um eine Polyurethan-, Polyester- oder Silikonschicht. Es sind aber auch andere Kunststoffe einsetzbar, sofern diese den jeweils gestellten Reinigungsanforderungen entsprechen und flammwidrig eingestellt sind.

Nach einer weiteren Ausgestaltung der Erfindung sind in der Kunststoffschicht Pigmente, insbesondere Metallpigmente wie z. B. Aluminiumpigmente, eingelagert. Metallpigmente gewährleisten eine gute Wärmereflexion und bieten somit einen besonders guten Brandschutz.

Geeignet ist vor allem eine Polyurethan-, Polyester- oder Silikonschicht, die dem Trägermaterial ohne Dämmschichtbildner/Ablationsbaustoff ein Flächengewicht von 198...242 g/m², insbesondere von 220 g/m², verleiht.

Soll das Trägermaterial mit einer Metallschicht versehen sein, bietet sich hierfür eine nicht brennbare, metallische Folie, beispielsweise aus Aluminium an. Eine solche Folie wird vollflächig auf das Trägermaterial kaschiert.

Bei dem Trägermaterial handelt es sich vorzugsweise um einen mineralischen Träger, beispielsweise ein Glasfilamentgewebe. Allerdings sind auch andere Trägermaterialien wie beispielsweise metallische Gewebe verwendbar.

Die Erfindung betrifft aber auch Kabel, die mit einer Kabelbandage versehen sind. Bei diesen Kabeln ist die neue Kabelbandage in bevorzugter Weise in Längsrichtung zu den Kabeln verlegt und bildet eine Abdeckung oder geschlossene Umhüllung für die Kabel. Dabei kann die Abdeckung oder geschlossene Umhüllung von metallischen Befestigungsmitteln wie Spannbändern, Draht, Klammern oder Schienen gehalten sein, um die Kabelbandage in vorschriftsmäßigen Abständen zu den Kabeln anzuordnen.

Die Erfindung wird nachfolgend anhand der in den Figuren dargestellten Ausführungsbeispiele näher erläutert. Es zeigen:
Fig. 1 einen Querschnitt durch ein Kabelbündel mit Kabelbandage;
Fig. 2 eine von der Kabelbandage umwickelte Kabeltrasse,
Fig. 3 ein von der Kabelbandage umwickeltes Kabelbündel in einer Kabeltrasse,
Fig. 4 ein von der Kabelbandage umwickeltes Kabelbündel sowie
Fig. 5 eine an Massivbauteilen befestigte Kabelbandage mit darunter liegendem Kabelbündel.

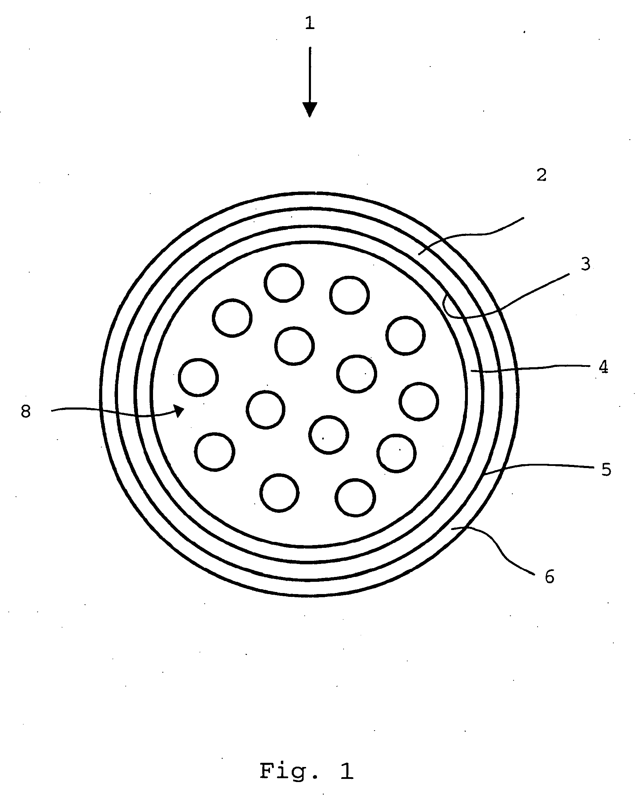

Bei dem in Fig. 1 gezeigten Querschnitt durch ein Kabelbündel 8 mit Kabelbandage 1 erkennt man den Aufbau der Kabelbandage 1. Das Trägermaterial 2 ist hierbei auf seiner inneren Seite 3 mit einem Dämmschichtbildner 4 und auf seiner äußeren Seite 5 mit einer Kunststoff- oder Metallschicht 6 versehen.

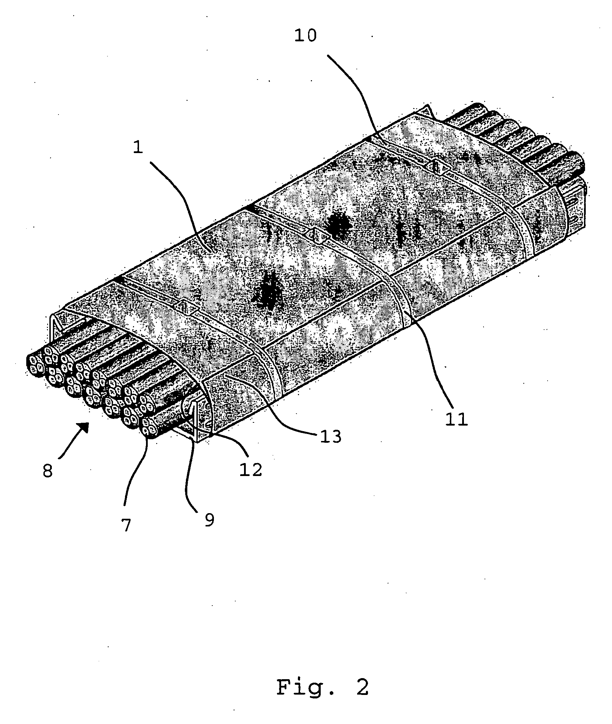

Die in Figur 2 dargestellte Kabeltrasse 9 besteht aus einem im Querschnitt U-förmigen Metallprofil zur Aufnahme von Kabeln 7 bzw. eines Kabelbündels 8. Die Kabeltrasse 9 kann beliebig, insbesondere vertikal verlegt sein. Die Kabeltrasse 9 ist mit dem darin angeordneten Kabelbündel 8 von der Kabelbandage 1 umwickelt und zwar so, dass sich die längsseitigen Endabschnitte 12, 13 überlappen. Diese Endabschnitte 12, 13 können miteinander verklebt sein. Zur weiteren Befestigung der Kabelbandage 1 sind metallische Befestigungsmittel 10 wie Spannbänder 11 vorgesehen, die in vorgegebenem Abstand von maximal 0,5 m angeordnet sind. Damit ergibt sich eine gut zu reinigende Trassenbandagierung mit guter Brandschutzwirkung.

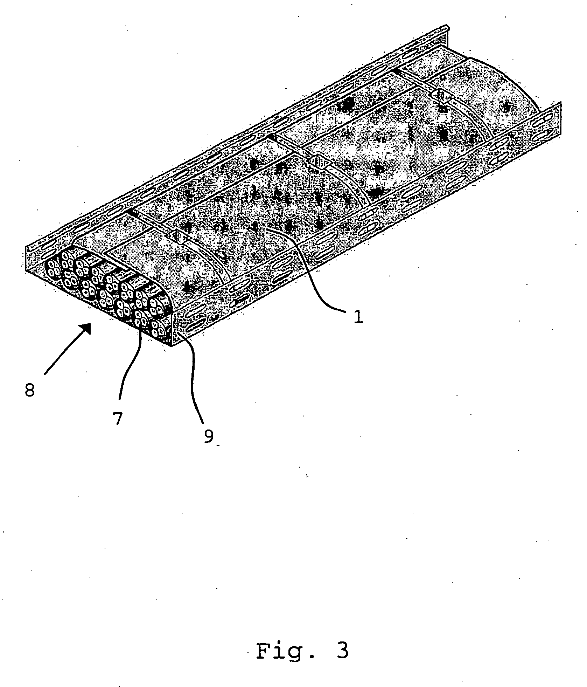

Fig. 3 zeigt ein von der Kabelbandage 1 umwickeltes Kabelbündel 8, das in einer Kabeltrasse 9 angeordnet ist. Im Gegensatz zu dem Ausführungsbeispiel in Fig. 2 umgibt die Kabelbandage 1 hier nur ein Kabelbündel 8, nicht aber eine Kabeltrasse.

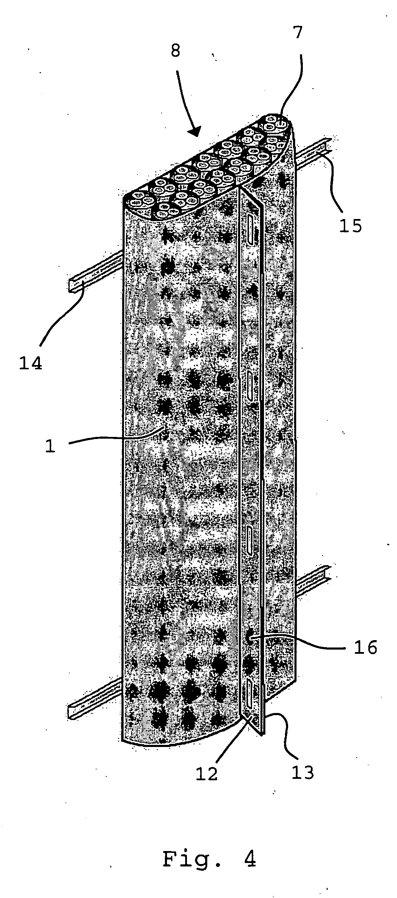

Bei dem Ausführungsbeispiel nach Fig. 4 ist auf eine Kabeltrasse verzichtet worden. Ein von der Kabelbandage 1 umwickeltes Kabelbündel 8 ist hier unmittelbar an Wandhalterungen 14, 15 angebracht. Darüber hinaus sieht dieses Ausführungsbeispiel eine Kabelbandage 1 vor, deren Endabschnitte 12, 13 einen gemeinsamen Steg 16 bilden, der dadurch entsteht, dass sich die Endabschnitte 12, 13 jeweils mit ihrer inneren Seite aneinander legen und in dieser Lage verklammert oder verklebt werden.

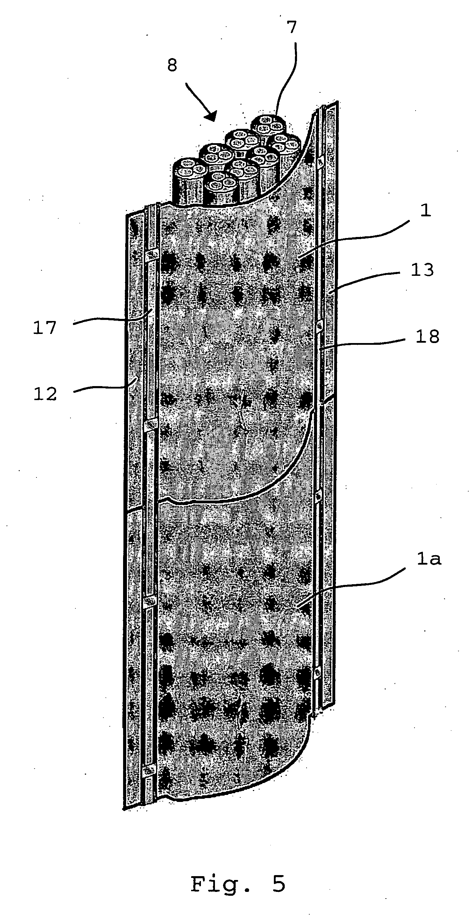

Das Ausführungsbeispiel nach Fig. 5 zeigt schließlich eine an nicht näher dargestellten Massivbauteilen befestigte Kabelbandage 1 mit darunter liegendem Kabelbündel 8. Das Kabelbündel 8 wird nach diesem Ausführungsbeispiel nicht von der Kabelbandage 1 umwickelt. Vielmehr deckt die Kabelbandage 1 das Kabelbündel 8 auf einem Massivbauteil, beispielsweise einer Betonwand, ab. Zur Befestigung der Kabelbandage 1 an dem Massivbauteil können hierzu metallische Schienen 17, 18 vorgesehen sein, die parallel zum Kabelbündel 8 auf den längsseitigen Endabschnitten 12, 13 der Kabelbandage 1 angeordnet sind. In diesem Ausführungsbeispiel erkennt man ferner, dass je nach Zuschnitt der Kabelbandage 1 auch mehrere Kabelbandagen 1, 1a in Längsrichtung miteinander verbunden sein können.

### Bezugszeichenliste

- 1: Kabelbandage
- 1a: Kabelbandage
- 2: Trägermaterial
- 3: Seite
- 4: Dämmschichtbildner/Ablationsbaustoff
- 5: Seite
- 6: Kunststoff- oder Metallschicht
- 7: Kabel
- 8: Kabelbündel
- 9: Kabeltrasse
- 10: Befestigungsmittel
- 11: Spannband
- 12: Endabschnitt
- 13: Endabschnitt
- 14: Wandhalterung
- 15: Wandhalterung
- 16: Steg
- 17: Schiene
- 18: Schiene

## Patentansprüche

1. Kabelbandage (1) für brandschutztechnische Zwecke mit einem Trägermaterial (2), das auf seiner einen Seite (3) mit einem Dämmschichtbildner oder Ablationsbaustoff (4) und auf seiner anderen Seite (5) mit einer Kunststoff- oder . Metallschicht (6) versehen ist.

2. Kabelbandage (1) nach Anspruch 1, **dadurch gekennzeichnet, dass** es sich bei der Kunststoffschicht (6) um eine Polyurethan-, Polyester- oder Silikonschicht handelt.

3. Kabelbandage (1) nach Anspruch 1 oder 2, **dadurch gekennzeichnet, dass** in die Kunststoffschicht (6) Pigmente, insbesondere Metallpigmente wie z. B. Aluminiumpigmente, eingelagert sind.

4. Kabelbandage (1) nach Anspruch 2 oder 3, **dadurch gekennzeichnet, dass** die Kunststoffschicht (6) dem Trägermaterial (2) ohne Dämmschichtbildner/Ablationsbaustoff (4) ein Flächengewicht von 198...242 g/m² verleiht.

5. Kabelbandage (1) nach Anspruch 1, **dadurch gekennzeichnet, dass** es sich bei der Metallschicht (6) um eine nicht brennbare, metallische Folie handelt.

6. Kabelbandage (1) nach einem der Ansprüche 1 bis 5, **dadurch gekennzeichnet, dass** es sich bei dem Trägermaterial (2) um ein Glasfilamentgewebe handelt.

7. Kabel (7), die mit einer Kabelbandage (1) nach einem der Ansprüche 1 bis 6 versehen sind.

8. Kabel (7) nach Anspruch 7, **dadurch gekennzeichnet, dass** die Kabelbandage (1) in Längsrichtung zu den Kabeln (7) verlegt ist und eine Abdeckung oder geschlossene Umhüllung für die Kabel (7) bildet.

9. Kabel (7) nach Anspruch 8, **dadurch gekennzeichnet, dass** die Abdeckung oder geschlossene Umhüllung von metallischen Befestigungsmitteln (10) gehalten ist.

## Claims

1. A cable bandage (1) for fire protection purposes with a carrier material (2), which is provided with an intumescent or ablative material (4) on its one side (3) and with a plastic or metal layer (6) on its other side (5).

2. The cable bandage (1) according to claim 1, **characterised in that** the plastic layer (6) is a polyurethane, polyester or silicon layer.

3. The cable bandage (1) according to claim 1 or 2, **characterised in that** pigments, particularly metal pigments such as aluminium pigments, for example, are deposited in the plastic layer (6).

4. The cable bandage (1) according to claim 2 or 3, **characterised in that** the plastic layer (6) gives the carrier material (2) without the intumescent/ablative material (4) a surface weight of 198...242 g/m².

5. The cable bandage (1) according to claim 1, **characterised in that** the metal layer (6) is a non-combustible, metallic film.

6. The cable bandage (1) according to one of the claims 1 to 5, **characterised in that** the carrier material (2) is a glass filament fabric.

7. Cables (7), which are provided with a cable bandage (1) according to one of the claims 1 to 6.

8. Cables (7) according to claim 7, **characterised in that** the cable bandage (1) is laid in a longitudinal direction to the cables (7) and forms a cover or closed casing for the cables (7).

9. Cables (7) according to claim 8, **characterised in that** the cover or closed casing is held by metallic securing means (10).

## Revendications

1. Bandage de câble (1) à vocation pare-feu avec une matière support (2), qui sur l'une de ses faces (3) est munie d'un formateur de couche d'isolation ou d'un matériau d'ablation (4) et sur son autre face est muni d'une couche en matière plastique ou en métal (6).

2. Bandage de câble (1) selon la revendication 1, **caractérisé en ce que** la couche en matière plastique (6) est une couche en polyuréthane, en polyester ou en silicone.

3. Bandage de câble (1) selon la revendication 1 ou 2, **caractérisé en ce que** dans la couche en matière plastique (6) sont emmagasinés des pigments, notamment des pigments métalliques, tels que pas exemple des pigments en aluminium.

4. Bandage de câble (1) selon la revendication 2 ou 3, **caractérisé en ce que** la couche en matière plastique (6) confère à la matière support (2) un grammage de 198 ... 242 g/m², sans formateur de couche d'isolation / matériau d'ablation (4).

5. Bandage de câble (1) selon la revendication 1, **caractérisé en ce que** la couche métallique (6) est un film métallique ininflammable.

6. Bandage de câble (1) selon l'une quelconque des revendications 1 à 5, **caractérisé en ce que** la matière support (2) est un tissu de filaments de verre.

7. Câbles (7) qui sont munis d'un bandage de câble (1) selon l'une quelconque des revendications 1 à 6.

8. Câbles (7) selon la revendication 7, **caractérisé en ce que** le bandage de câble (1) est posé en direction longitudinale des câbles et forme un recouvrement ou une enveloppe fermée pour les câbles (7).

9. Câbles (7) selon la revendication 8, **caractérisé en ce que** le recouvrement ou l'enveloppe fermée est maintenu(e) pas des moyens de fixation métalliques.
